# EUROPÄISCHE PATENTSCHRIFT

(11) **EP 2 443 172 B1**
(45) Veröffentlichungstag und Bekanntmachung des Hinweises auf die Patenterteilung: **21.09.2016**
(21) Anmeldenummer: 10725446.8
(22) Anmeldetag: 15.06.2010
(51) Int. Cl.: C08G 65/00

(54) **AROMATISCHE POLYETHERSULFON-BLOCKCOPOLYMERE**
AROMATIC POLYETHERSULFONE BLOCK COPOLYMERS
COPOLYMÈRES BLOCS DE POLYÉTHERSULFONE AROMATIQUE

(30) Priorität: 16.06.2009 EP 09162858
(43) Veröffentlichungstag der Anmeldung: 25.04.2012
(73) Patentinhaber: BASF SE, 67056 Ludwigshafen am Rhein (DE)
(72) Erfinder: KHVOROST, Alexander, 119454 Moskau (RU); WEBER, Martin, 67487 Maikammer (DE); SCHMIDT, Christian, 67061 Ludwigshafen (DE); BELACK, Jörg, Skillmann, NJ 08558 (US); GIBON, Cecile, 68159 Mannheim (DE); V. BERNSTORFF, Bernd-Steffen, 67157 Wachenheim (DE)
(74) Vertreter: BASF IP Association
(86) Internationale Anmeldenummer: PCT/EP2010/058390
(87) Internationale Veröffentlichungsnummer: WO 2010/146052

(56) Entgegenhaltungen:
- EP-A1- 0 932 213
- EP-A1- 1 394 879
- EP-A2- 1 113 517

## Beschreibung

Die Erfindung betrifft aromatische Polyethersulfon-Blockcopolymere, Verfahren zu ihrer Herstellung und ihre Verwendung in Brennstoffzellen oder als Membranen zur Wasseraufbereitung.

Der Einsatz von Polyelektrolyten für feste polymere Brennstoffzellen, die auf aromatischen Polyethersulfon-Blockcopolymeren beruhen, ist an sich bekannt. Entsprechende Copolymere sind in der EP-A-1 394 879 beschrieben. Es handelt sich insbesondere um Polyethersulfon(PES)-Polyphenylsulfon(PPSU)-Blockcopolymere, die mit konzentrierter Schwefelsäure bei Raumtemperatur sulfoniert wurden. Das Verhältnis von hydrophilen Segmenten zu hydrophoben Segmenten liegt zwischen 0,6 und 2,0, der Gewichtsanteil der hydrophilen Segmente liegt oberhalb von 0,375.

Die US 2004/0138387 betrifft Blockcopolymere und ihre Verwendung als Polymerelektrolyt in Brennstoffzellen. Die Sulfonierung wird mit konzentrierter Schwefelsäure bei Temperaturen von 40 bis 60 °C durchgeführt. Bei den Polymeren handelt es sich insbesondere um Polyetherethersulfone.

Die EP-A-1 113 517 betrifft Polymerelektrolyte und Verfahren zu ihrer Herstellung. Dabei wird beispielsweise ein Blockcopolymer aus Dihydroxydiphenylsulfon, Dihydroxybiphenyl und Dichlordiphenylsulfon hergestellt und nachfolgend mit konzentrierter Schwefelsäure sulfoniert.

Auch für die Entsalzung von Wasser werden ähnliche polymere Materialien zur Herstellung von Membranen eingesetzt. In Angew. Chem. Int. Ed. 2008, 47, Seiten 1 bis 7, sind Chlor-tolerante Polymere für die Wasserentsalzung beschrieben. Es handelt sich um Polyarylenethersulfon-Copolymere, die aus disulfonierten Monomeren und nicht sulfonierten Monomeren hergestellt werden.

Aufgabe der vorliegenden Erfindung ist die Bereitstellung verbesserter aromatischer Polyethersulfon-Blockcopolymere, die als Polyelektrolyt bei der Herstellung von Brennstoffzellen oder als Membran zur Wasseraufbereitung eingesetzt werden können. Die Polymere sollen verbesserte Anwendungseigenschaften bzw. ein geeignetes Eigenschaftsprofil zeigen, insbesondere bezüglich der Protonenleitfähigkeit, Methanolpermeation und Quellung. Für die Wasseraufbereitung sollen sie zudem eine gute chemische Beständigkeit und Resistenz gegen Fouling zeigen.

Die Aufgabe wird erfindungsgemäß gelöst durch ein aromatisches Polyethersulfon-Blockcopolymer, umfassend hydrophile Segmente, die Sulfonsäuregruppen aufweisen, und hydrophobe Segmente, die keine Sulfonsäuregruppen aufweisen, wobei der Gewichtsanteil an hydrophilen Segmenten 0.05 bis 0.30 beträgt, bezogen auf das gesamte Blockcopolymer (entsprechend 5 bis 30 Gew.-%).

Die Aufgabe wird zudem gelöst durch ein Verfahren zur Herstellung derartiger aromatischer Polyethersulfon-Blockcopolymere, wobei ein aromatisches Polyethersulfon-Blockcopolymer mit konzentrierter Schwefelsäure bei einer Temperatur im Bereich von 20 bis 70 °C sulfoniert wird.

Die Aufgabe wird zudem gelöst durch die Verwendung der vorstehenden aromatischen Polyethersulfon-Blockcopolymere als Polyelektrolyt zur Herstellung von Brennstoffzellen oder zur Herstellung von Membranen zur Wasseraufbereitung.

Die Erfindung betrifft zudem eine Brennstoffzelle, enthaltend als Polyelektrolyt ein aromatisches Polyethersulfon-Blockcopolymer, wie es vorstehend beschrieben ist.

Die Erfindung betrifft ferner eine Membran zur Wasseraufbereitung, enthaltend ein aromatisches Polyethersulfon-Blockcopolymer, wie es vorstehend beschrieben ist.

Die erfindungsgemäßen aromatischen Polyethersulfon-Blockcopolymere weisen ein vorteilhaftes Spektrum mechanischer und chemischer Anwendungseigenschaften auf, die sie sowohl als Polyelektrolyt wie auch zur Herstellung von Membranen geeignet machen.

Bevorzugte Blockcopolymere und ihre Herstellung sind nachstehend näher erläutert.

In den Blockcopolymeren der vorliegenden Erfindung sind die hydrophilen Segmente von den hydrophoben Segmenten dadurch unterschieden, dass die hydrophilen Segmente Sulfonsäuregruppen aufweisen, die hydrophoben Segmente jedoch nicht. Der Gewichtsanteil an hydrophilen Segmenten liegt im Bereich von 0,05 bis 0,30.

Derartige Blockcopolymere sind insbesondere als Polyelektrolyte zur Herstellung von Brennstoffzellen geeignet.

Die Gewichtsanteile beziehen sich immer auf das gesamte Blockcopolymer. Derartige Blockcopolymere sind insbesondere zur Herstellung von Membranen zur Wasseraufbereitung geeignet.

Als hydrophile Segmente werden erfindungsgemäß solche Segmente verstanden, die Sulfonsäuregruppen aufweisen. Entsprechend werden unter hydrophoben Segmenten solche Segmente verstanden, die keine Sulfonsäuregruppen aufweisen.

Die hydrophilen Segmente enthalten sulfonierte Polyphenylensulfon(PPSU)-Bausteine. Diese haben die allgemeine Formel (2) 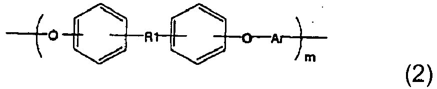 wobei R1 S(=O)₂ bedeutet, Ar einen zweiwertigen aromatischen Rest bedeutet und m eine ganze Zahl von 3 bis 1500, vorzugsweise 5 bis 500 ist. Der Rest Ar kann zudem eine Bedeutung haben, wie sie in EP-A-1 394 879 für die Strukturen der allgemeinen Formel (2) angegeben sind.

Der aromatische Rest Ar ist vorzugsweise ein mehrkerniger aromatischer Rest, vorzugsweise ein Biphenylrest der allgemeinen Formel (3)

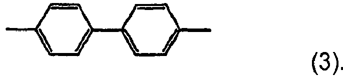

Damit handelt es sich besonders bevorzugt um einen Polyphenylsulfonrest.

Im Biphenylrest der allgemeinen Formel (3) können die Phenylgruppen auch über eine Gruppe -C(CH₃)₂- verbunden sein.

Der Rest der allgemeinen Formel (2) wird durch nachfolgende Sulfonierung in die hydrophilen Segmente überführt. Besonders bevorzugt trägt jede der Phenylengruppen in der Formel (3) nach der Sulfonierung eine Sulfonsäuregruppe. Bevorzugt liegt die Sulfonsäuregruppe in Ortho-Stellung zum angebundenen Sauerstoff vor.

Die hydrophoben Segmente sind Polyethersulfon-Segmente. Die hydrophoben Segmente haben die allgemeine Formel (1) 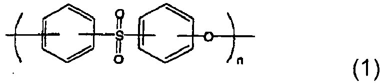 mit n ganze Zahl von 3 bis 1500.

Das Polyethersulfon hat besonders bevorzugt die Formel (4)

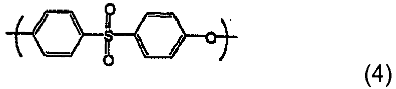

Erfindungsgemäß wird zunächst ein Blockcopolymer insbesondere aus Polyethersulfon-Einheiten und Polyphenylsulfon-Einheiten hergestellt, und das erhaltene Blockcopolymer wird nachfolgend mit konzentrierter wässriger Schwefelsäure (etwa 98 %ig) selektiv sulfoniert. Dabei werden vorzugsweise nur die Gruppen der vorstehenden Formel (3) sulfoniert.

Bei der Herstellung der aromatischen Polyethersulfon-Blockcopolymere gemäß der vorliegenden Erfindung werden die aromatischen Polyethersulfon-Blockcopolymere vorzugsweise mit konzentrierter Schwefelsäure bei einer Temperatur im Bereich von 20 bis 70 °C, vorzugsweise 25 bis 50 °C, sulfoniert.

Bevorzugt liegen die Polyethersulfonblöcke und Polyphenylsulfonblöcke im erfindungsgemäßen Blockcopolymer so vor, dass die Polymerblöcke eine Phasenseparation im Größenbereich von 10 bis 100 nm zeigen. Die sulfonierten Blockcopolymere PES/sPPSU haben im Vergleich zu statistischen Copolymeren den Vorteil einer starken Separation im genannten Bereich von 10 bis 100 nm.

Durch Phasenseparation im Nanometerbereich erhalten die Blockcopolymere gleichzeitig Eigenschaften wie mechanische Stabilität, geringe Flächen-Quellung in Wasser/Methanol und hohe Wasserdurchlässigkeit bzw. hohe Ionenleitfähigkeit. Diese Kombination aus zum Teil gegenteiligen Eigenschaften ist mit statistischen Copolymeren nicht zu realisieren. Beispielsweise können statistische PES-PPSU-Copolymere mit PPSU-Anteilen von mehr als 20 % nach der Sulfonierung aufgrund der starken Quellung bzw. der Löslichkeit in Wasser nicht oder kaum isoliert werden. Blockcopolymere mit PPSU-Anteilen von bis zu 35 Gew.-% können immer noch isoliert werden.

M ist vorzugsweise eine Zahl im Bereich von 5 bis 500.

Besonders bevorzugt entsprechen die hydrophilen Segmente der in EP-A-1 394 879 angegebenen Formel (7) und die hydrophoben Segmente der dort angegebenen Formel (8).

Die Sulfonsäuregruppen des erfindungsgemäßen Blockcopolymers besitzen vorzugsweise eine Ionenaustauschkapazität von 0,07 bis 1,43 mmol/g, besonders bevorzugt von 0,178 bis 1,07 mmol/g.

Die Herstellung der erfindungsgemäßen aromatischen Polyethersulfon-Blockcopolymere erfolgt durch zunächst Synthese eines nicht sulfonierten Blockcopolymers, das nachfolgend sulfoniert wird.

Ein aromatisches Polyethersulfon kann als das Präpolymer mit einem hydrophoben Segment verwendet werden. Es wird zum Beispiel durch die Reaktion zwischen einem Dialkalimetallsalz eines zweiwertigen Phenols und einem aromatischen Dihalogenid synthetisiert, wie es in R. N. Johnson et al., J. Polym. Sci., A-1, Vol. 5, 2375 (1967) und JP-B-46-21458 gelehrt wird.

Das aromatische Dihalogenid umfasst Bis(4-chlorphenyl)sulfon, Bis(4-fluorphenyl)sulfon, Bis(4-brom-phenyl)sulfon, Bis(4-lod-phenyl)sulfon, Bis(2-chlorphenyl)sulfon, Bis (2-fluorphenyl)sulfon, Bis(2-methyl-4-chlorphenyl)sulfon, Bis(2-methyl-4-fluorphenyl)sulfon, Bis(3,5-dimethyl-4-chlorphenyl)sulfon, und Bis(3,5-di-methyl-4-fluorphenyl)sulfon. Diese können entweder einzeln oder als eine Kombination von zwei oder mehreren derselben verwendet werden. Von diesen Verbindungen sind Bis(4-chlorphenyl)sulfon und Bis(4-fluorphenyl)sulfon bevorzugt.

Der zweiwertige Alkohol umfasst Bis(4-hydroxyphenyl)sulfon und Bis(4-hydroxyphenyl)keton, wobei Bis (4-hydroxyphenyl)sulfon bevorzugt ist.

Das Dialkalimetallsalz eines zweiwertigen Phenols ist erhältlich durch die Reaktion zwischen dem zweiwertigen Phenol und der Alkalimetallverbindung, wie zum Beispiel Kaliumcarbonat, Kaliumhydroxid, Natriumcarbonat oder Natriumhydroxid.

Eine Kombination von Natrium- oder Kaliumsalz von Bis(4-hydroxyphenyl)sulfon und Bis (4-chlorphenyl)sulfon oder Bis(4-fluorphenyl)sulfon ist eine bevorzugte Kombination des Dialkalimetallsalzes eines zweiwertigen Phenols und des aromatischen Dihalogenids.

Die Reaktion zwischen dem Dialkalimetallsalz eines zweiwertigen Phenols und dem aromatischen Dihalogenid wird in einem polaren Lösungsmittel durchgeführt, wie zum Beispiel Dimethylsulfoxid, Sulfolan, N-Methyl-2-pyrrolidon, 1,3-Dimethyl-2-imidazolidinon, N,N-Dimethylformamid, N,N-Dimethylacetamid und Di-phenylsulfon. Die Reaktionstemperatur beträgt vorzugsweise 140 °C bis 320 °C. Die Reaktionszeit beträgt vorzugsweise 0,5 Stunden bis 100 Stunden.

Die Verwendung von entweder dem zweiwertigen Phenol oder dem aromatischen Dihalogenid im Überschuss führt zur Bildung von Endgruppen, die für die Kontrolle des Molekulargewichts des Präpolymers, sowie für die Synthese des Blockcopolymers verwendet werden können. Andererseits werden das zweiwertige Phenol oder das aromatische Dihalogenid in äquimolaren Mengen eingesetzt, und entweder werden ein einwertiges Phenol, zum Beispiel Phenol, Kresol, 4-Phenylphenol oder 3-Phenylphenol, oder ein aromatisches Halogenid, zum Beispiel 4-Chlorphenylphenylsulfon, 1-Chlor-4-nitrobenzol, 1-Chlor-2-nitrobenzol, 1-Chlor-3-nitrobenzol, 4-Fluorbenzophenon, 1-Fluor-4-nitrobenzol, 1-Fluor-2-nitrobenzol oder 1-Fluor-3-nitro-benzol, zugegeben.

Der Polymerisationsgrad des Präpolymers liegt im Bereich von 3 bis 1500, vorzugsweise von 5 bis 500. Bei einem Polymerisationsgrad von weniger als 3 zeigt das daraus synthetisierte Blockcopolymer kaum die gewünschten Eigenschaften. Bei einem Polymerisationsgrad von mehr als 1500 ist es schwierig, das Blockcopolymer zu synthetisieren.

Da ein aromatischer Ring, der an eine Elektronen ziehende Gruppe gebunden ist, schwierig zu sulfonieren ist, ist es bevorzugt, dass das Präpolymer aus einem hydrophoben Segment eine Elektronen ziehende Gruppe S(=0)₂ aufweist, welche an den aromatischen Ring desselben gebunden ist. Ein bevorzugtes Präpolymer aus einem hydrophoben Segment besitzt eine Struktur, die durch die chemische Formel (1) gezeigt ist: 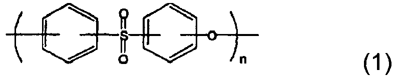 wobei n eine ganze Zahl von 3 bis 1500 darstellt.

Das Präpolymer aus einem nicht sulfonierten, hydrophilen Segment, welches im Verfahren (1) eingesetzt wird, wird vorzugsweise aus einem aromatischen Dihalogenid und einem zweiwertigen Phenol synthetisiert, welches Phenol keine Elektronen ziehende Gruppe an einem aromatischen Ring aufweist. Das zweiwertige Phenol ohne eine Elektronen ziehende Gruppe an seinem aromatischen Ring umfasst Hydrochinon, Resorcin, 1,5-Dihydroxynaphthalin, 1,6-Dihydroxynaphthalin, 1,7-Dihydroxynaphthalin, 2,7-Dihydroxynaphthalin, 4,4'-Biphenol, 2,2'-Biphenol, Bis(4-hydroxyphenyl)ether, Bis (2-hydroxyphenyl)ether, 2,2-Bis(4-hydroxyphe-nyl)propan, 2,2-Bis(3-methyl-4-hydroxyphenyl)propan, 2,2-Bis(3,5-dimethyl-4-hydroxyphenyl)propan, Bis (4-hydroxy-phenyl)methan, 2,2-Bis(3,5-dimethyl-4-hydroxyphenyl)hexafluorpropan und 9,9-Bis(4-hydroxyphenyl)fluoren. Darunter sind Hydrochinon, Resorcin, 1,5-Dihydroxynaphthalin, 1,6-Dihydroxynaphthalin, 1,7-Dihydroxynaphthalin, 2,7-Dihydroxynaphthalin, 4,4'-Biphenol, 2,2'-Biphenol, Bis(4-hydroxyphenyl)ether, Bis(2-hydroxyphenyl)ether und 9,9-Bis(4-hydroxyphenyl)fluoren bevorzugt.

Das aromatische Dihalogenid umfasst solche mit einer Sulfongruppe, welche für die Synthese des Präpolymers eines hydrophoben Segments nützlich sind, und darüber hinaus solche mit einer Ketongruppe, wie zum Beispiel 4,4'-Difluorbenzophenon und 2,4'-Difluorbenzophenon. Das Präpolymer eines nicht sulfonierten hydrophilen Segments ist eines mit der Struktur der chemischen Formel (2): 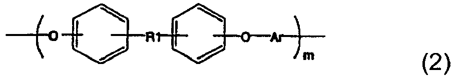 wobei R1 S(=0)₂ darstellt; Ar eine zweiwertige, aromatische Restgruppe darstellt; und m eine ganze Zahl von 3 bis 1500 darstellt.

Polyethersulfone sind beispielsweise unter der Bezeichnung Sumikaexcel^{®} von Sumitomo Chemical Co., Ltd. erhältlich. Polyarylethersulfone sind beispielsweise unter der Bezeichnung Radel^{®} von Solvay erhältlich.

Eine Modifikation des Molekulargewichts und der Endgruppen von im Handel erhältlichen Polymeren kann bewirkt werden durch Etheraustausch mit den vorstehend erwähnten Alkalimetallsalzen der zweiwertigen Phenole oder des einwertigen Phenols unter denselben Bedingungen wie für die Synthese der aromatischen Polyethersulfone, die in R. N. Johnson et al., J. Polym. Sci., A-1, Vol. 5, 2375 (1967) oder JP-B-46-21458 beschrieben ist.

Das nicht sulfonierte Blockcopolymer wird durch die Reaktion zwischen dem vorstehend beschriebenen Präpolymer eines hydrophoben Segments und dem Präpolymer eines nicht sulfonierten, hydrophilen Segments synthetisiert. Es ist bevorzugt, dass das Präpolymer eines hydrophoben Segments eine Halogen-Endgruppe oder eine Endgruppe eines Alkalimetallsalzes eines Phenols aufweist. Es ist bevorzugt, dass das Präpolymer eines nicht sulfonierten, hydrophilen Segments eine entsprechende Halogen-Endgruppe oder eine entsprechende Endgruppe eines Alkalimetallsalzes eines Phenols aufweist. Die Reaktion wird in dem vorstehend erwähnten Lösungsmittel bei einer Reaktionstemperatur von 140 °C bis 320 °C für eine Reaktionszeit von 0,5 Stunden bis 100 Stunden durchgeführt. Diese Reaktion ist zum Beispiel in Z. Wu et al., Angew. Makromol. Chem., Vol. 173, 163 (1989) und Z. Wang et al., Polym. Int., Vol. 50, 249 (2001) beschrieben.

Das nicht sulfonierte Blockcopolymer kann auch durch die Reaktion zwischen den zwei Segment-Präpolymeren synthetisiert werden, welche beide eine Endgruppe eines Alkalimetallsalzes eines Phenols aufweisen, indem ein verknüpfendes Mittel in derselben Weise verwendet wird. Die vorstehend angegebenen, aromatischen Dihalogenide können als das Verbindungsmittel verwendet werden. Aromatische Difluoride, wie zum Beispiel Bis(2-fluorphenyl)sulfon und Bis(4-fluorphenyl)sulfon werden als Verbindungsmittel aufgrund ihrer hohen Reaktivität bevorzugt. Eine Sulfonierung von Produkten aus direkter Kopplung ist möglich.

Die Sulfonierung wird erfindungsgemäß bei einer Temperatur von 20 bis 70 °C mit Schwefelsäure durchgeführt. Die Schwefelsäure ist vorzugsweise 90 bis 98 gew.-%ig, insbesondere 98 gew.-%ig. In diesem Temperaturbereich wird lediglich das hydrophile Segment erfolgreich sulfoniert, da das hydrophobe Segment, welches eine Elektronenziehende Gruppe aufweist, die an den aromatischen Ring gebunden ist, nicht zu sulfonieren ist.

Bei einer vollständigen Sulfonierung wird damit der Sulfonierungsgrad durch die Polyphenylsulfon(PPSU)-Segmente bestimmt, die bei der Polykondensation eingebaut werden. Während der Sulfonierung werden alle PPSU-Blöcke durchsulfoniert. Die Kontrolle des Sulfonierungsgrades ist über die Molmasse und die Segmentllänge der PES/PPSU-Blockcopolymere sehr gut einstellbar.

Die erfindungsgemäßen sulfonierten Blockcopolymere haben im Vergleich zu statistischen Copolymeren den Vorteil einer starken Phasenseparation. Die Polymerblöcke zeigen vorzugsweise eine Phasenseparation im Größenbereich von 10 bis 100 nm. Erfindungsgemäße Polymere haben, bezogen auf das unsulfonierte Polymer, vorzugsweise ein Gewichtsmittel des Molekulargewichtes (Mw) im Bereich von 1 bis 200 kg/mol, besonders bevorzugt 5 bis 100 kg/mol, insbesondere bevorzugt 5 bis 70 kg/mol, bestimmt durch Gelpermeationchromatografie/Größenausschlusschromatografie (GPC/SEC). Die Methode ist dem Fachmann hinreichend bekannt und entspricht dem Stand der Forschung.

Die Messbedingungen wurden wie folgt gewählt: Die Polymere wurden mit einer Konzentration von 2 g/L in DMAc (Dimethylacetamid) unter Zugabe von 0,5 % Salz gelöst. Es findet eine Vorfiltration der Lösung über einen Standard-Spritzenfilter mit einer Porengröße von 0,2 µm statt. Die Injektionsmenge beträgt 200 µL bei einer Säulen-Temperatur von 80 °C. Die Ausschlusschromatographie wurde mit einer Kombination von mehreren Säulen (Theor. berechnete Böden in der gewählten Säulenkombination u. Durchflussgeschwindigkeit: 17200) durchgeführt. Die Detektion der Signale geschah mittels eines Differentialrefraktometers (Bestimmung des Brechungsindex). Die Kalibrierung erfolgte mit eng verteilten PMMA-Standards der Fa. PSS mit Molekulargewichten von M = 800 bis M = 1.820.000 g/mol. Alle bestimmten Werte liegen innerhalb der Grenzen des Standards.

Die Erfindung betrifft auch die Verwendung der aromatischen Polyethersulfon-Blockcopolymere, wie sie vorstehend beschrieben sind, als Polyelektrolyt zur Herstellung von Brennstoffzellen oder zur Herstellung von Membranen zur Wasseraufbereitung. Der Einsatz von Polyelektrolytmembranen in Brennstoffzellen ist allgemein bekannt. Hierzu kann beispielsweise auf die EP-A-1 394 879, EP-A-1 113 517, US 2004/0138387, EP-A-1 669 391 und EP-A-1 855 339 verwiesen werden. Polyelektrolytmembranen können beispielsweise durch Verfahren zur Filmbildung unter Verwendung der erfindungsgemäßen Blockcopolymere erhalten werden.

Das Verfahren zur Filmbildung zur Erzielung einer Polyelektrolytmembran für eine Zelle mit einem festen polymeren Brennstoff der vorliegenden Erfindung, ausgehend von einem so hergestellten Blockcopolymer aus einem aromatischen Polyethersulfon, ist nicht in besonderer Weise beschränkt. Zum Beispiel wird das Blockcopolymer aus einem aromatischen Polyethersulfon in einem polaren Lösungsmittel gelöst, wie zum Beispiel Dimethylsulfoxid, Sulfolan, N-Methyl-2-pyrrolidon, 1,3-Dimethyl-2-imidazolidinon, N,N-Dimethylforma-mid, N,N-Dimethylacetamid oder Diphenylsulfon, die Lösung auf einen Träger gegossen, und das (polare) Lösungsmittel wird, z. B. durch Verdampfung entfernt. Die Filmdicke beträgt 5 bis 200 µm, vorzugsweise 10 bis 150 µm. Ein Film, der dünner als 5 µm ist, ist typischerweise schwierig zu handhaben. Ein Film, der dicker als 200 µm ist, ist ungünstig, da eine Brennstoffzelle, welche eine solche Membran enthält, eine verminderte Wirksamkeit bei der Stromerzeugung aufweist.

Falls gewünscht, kann die Polyelektrolytmembran der vorliegenden Erfindung in Bezug auf einen Teil ihrer Sulfonsäuregruppen in Form eines Metallsalzes vorliegen, sofern die Eigenschaften der vorliegenden Erfindung nicht verschlechtert werden. Darüber hinaus kann die Membran durch Fasern, einen porösen Film und dergleichen verstärkt werden. Falls notwendig, kann die Polyelektrolytmembran anorganische Säuren, die darunter gemischt werden, enthalten, zum Beispiel Phosphorsäure, Hypophosphorsäure und Schwefelsäure, oder Salze derselben, Perfluoralkylsulfonsäuren mit 1 bis 14 Kohlenstoffatomen oder Salze derselben, Perflu-oralkylcarbonsäuren mit 1 bis 14 Kohlenstoffatomen oder Salze derselben, anorganische Substanzen, zum Beispiel Platin, Silica-Gel, Siliziumdioxid und Zeolithe und andere Polymere.

Die Herstellung der Brennstoffzelle an sich unterliegt keinen Einschränkungen.

Die Herstellung einer Membran-Elektroden-Einheit (MEE) kann durch Verpressen mit einer Gasdiffusionselektrode (GDE) oder durch direktes Beschichten mit einer Katalysatorlösung geschehen, z. B. durch Screen-Printing. Hierdurch wird eine Catalyst Coated Membrane (CCM) erhalten.

Die erfindungsgemäßen aromatischen Polyethersulfon-Blockcopolymere können zudem zur Herstellung von Membranen zur Wasseraufbereitung eingesetzt werden. Die Herstellung entsprechender Membranen ist beispielsweise in Angew. Chem. Int. Ed. 2008, 47, Seiten 1 bis 7 beschrieben. Die Membranherstellung erfolgt insbesondere durch Gießen einer Lösung des Polymers auf einen ebenen Untergrund wie eine Glasplatte und nachfolgendes Entfernen des Lösungsmittels. Die Entfernung des Lösungsmittels kann beispielsweise durch Erwärmen oder durch Anlegen eines Unterdrucks erfolgen.

Membranen für die Wasseraufbereitung sind im Allgemeinen semipermeable Membranen, die eine Separation von gelösten und suspendierten Teilchen von Wasser ermöglichen, wobei der Separationsprozess selber entweder druck- oder elektrisch getrieben sein kann. Typische, jedoch nicht limitierende, Membrananwendungsbeispiele für die erfindungsgemäßen Polymere sind druckgetriebene Membrantechnologien wie Miktrofiltration (MF; Trenngrenze ca. 0,08 bis 2 µm; sehr kleine, suspendierte Partikel, Kolloide, Bakterien), Ultrafiltration (UF; Trenngrenze ca. 0,005 bis 0,2 µm; organische Partikel > 1000 MW, Viren, Bakterien, Kolloide), Nanofiltration (NF, Trenngrenze 0,001 bis 0,01 µm, organische Partikel > 300 MW, THM Prekursoren, Viren, Bakterien, Kolloide, gelöste Stoffe) oder Umkehrosmose (RO, Trenngrenze 0,0001 bis 0,001 µm, Ionen, organische Stoffe > 100 MW). Die Herstellung aller Membranen ist aus den erfindungsgemäßen Polymeren möglich.

Die Herstellungswege für alle Membranen sind in der Literatur bekannt und beispielsweise von M. C. Porter et al. im Handbook of Industrial Membrane Technology (William Andrew Publishing/Noyes, 1990) beschrieben. Die häufigsten, nicht limitierenden, Konfigurationsbeispiele für die erfindungsgemäßen Polymere in Systemen sind Filtrationsmodule aus Hohlfasern, oder Wickelmembranmodule. Diese sind dem Fachmann ebenfalls bekannt und in der Literatur beschrieben (s. o.).

Mögliche, jedoch nicht limitierende, Herstellungswege für Membranen für verschiedene Anwendungen auf dem Gebiet der Wasseraufbereitung aus den erfindungsgemäßen Polymeren sind in der Abbildung 1-1 des Handbook of Industrial Technology (edited by Mark C. Porter, Pleasanton, California Reprint Edition Noyes Publications, Westwood, New Jersey, USA) dargestellt.

Die Erfindung betrifft auch entsprechende Brennstoffzellen, enthaltend als Polyelektrolyt ein erfindungsgemäßes aromatisches Polyethersulfon-Blockcopolymer, und eine Membran zur Wasseraufbereitung, enthaltend als Membranmaterial ein erfindungsgemäßes aromatisches Polyethersulfon-Blockcopolymer.

## Patentansprüche

1. Aromatisches Polyethersulfon-Blockcopolymer, umfassend hydrophile Segmente, die Sulfonsäuregruppen aufweisen, und hydrophobe Segmente, die keine Sulfonsäuregruppen aufweisen, wobei der Gewichtsanteil an hydrophilen Segmenten 0,05 bis 0,30 beträgt, bezogen auf das gesamte Blockcopolymer Contsprechend 5-30 Gew.-%, wobei die hydrophoben Segmente Polyethersulfon-Bausteine enthalten und die hydrophilen Segmente sulfonierte Polyphenylensulfon-Bausteine enthalten, wobei die Polyethersulfon-Bausteine Wiederholeinheiten der allgemeinen Formel (1) enthalten 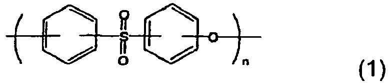 wobei n eine Zahl im Bereich von 3 bis 1500 ist, und die sulfonierten Polyphenylensulfon-Bausteine durch Sulfonierung von Struktureinheiten der allgemeinen Formel (2) erhalten werden 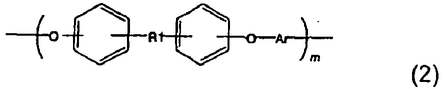
mit der Bedeutung R1 S(=O)₂;
Ar divalenter aromatischer Rest
m Zahl im Bereich von 3 bis 1500.

2. Blockcopolymer nach Anspruch 1, **dadurch gekennzeichnet, dass** die Polymerblöcke eine Phasenseparation im Größenbereich von 10 bis 100 nm zeigen.

3. Verfahren zur Herstellung von aromatischen Polyethersulfon-Blockcopolymeren nach einem der Ansprüche 1 oder 2, **dadurch gekennzeichnet, dass** ein aromatisches Polyethersulfon-Blockcopolymer mit konzentrierter Schwefelsäure bei einer Temperatur im Bereich von 20 bis 70 °C sulfoniert wird.

4. Verwendung von aromatischen Polyethersulfon-Blockcopolymeren nach einem der Ansprüche 1 oder 2 als Polyelektrolyt zur Herstellung von Brennstoffzellen oder zur Herstellung von Membranen zur Wasseraufbereitung.

5. Brennstoffzelle, enthaltend als Polyelektrolyt ein aromatisches Polyethersulfon-Blockcopolymer nach einem der Ansprüche 1 oder 2.

6. Membran zur Wasseraufbereitung, enthaltend ein aromatisches Polyethersulfon-Blockcopolymer nach einem der Ansprüche 1 oder 2.

## Claims

1. An aromatic polyether sulfone block copolymer comprising hydrophilic segments which have sulfonic acid groups and hydrophobic segments which have no sulfonic acid groups, wherein the proportion by weight of hydrophilic segments is from 0.05 to 0.30, based on the total block copolymer (corresponding to 5-30 wt%, wherein the hydrophobic segments comprise polyether sulfone building blocks and the hydrophilic segments comprise sulfonated polyphenylene sulfone building blocks, wherein the polyether sulfone building blocks comprise repeating units of the general formula (1) 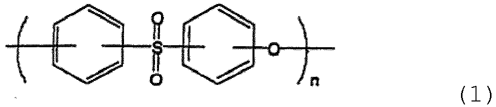 where n is a number in the range from 3 to 1500, and the sulfonated polyphenylene sulfone building blocks are obtained by sulfonation of structural units of the general formula (2) 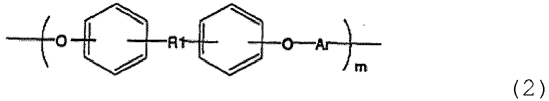
where Rl is S(=O)₂;
Ar is a divalent aromatic radical
m is a number in the range from 3 to 1500.

2. The block copolymer according to claim 1, wherein the polymer blocks display a phase separation in the order of from 10 to 100 nm.

3. A process for preparing aromatic polyether sulfone block copolymers according to either of claims 1 and 2, wherein an aromatic polyether sulfone block copolymer is sulfonated by means of concentrated sulfuric acid at a temperature in the range from 20 to 70°C.

4. The use of aromatic polyether sulfone block copolymers according to either of claims 1 and 2 as polyelectrolyte for producing fuel cells or for producing membranes for water treatment.

5. A fuel cell comprising an aromatic polyether sulfone block copolymer according to either of claims 1 and 2 as polyelectrolyte.

6. A membrane for water treatment comprising an aromatic polyether sulfone block copolymer according to either of claims 1 and 2.

## Revendications

1. Copolymère séquencé de polyéthersulfone aromatique, comprenant des segments hydrophiles qui comprennent des groupes acide sulfonique, et des segments hydrophobes qui ne comprennent pas de groupes acide sulfonique, la proportion en poids de segments hydrophiles étant de 0,05 à 0,30, par rapport à l'ensemble du copolymère séquencé (correspondant à 5 à 30 % en poids), les segments hydrophobes contenant des constituants polyéthersulfone et les segments hydrophiles contenant des constituants polyphénylènesulfone sulfonés, les constituants polyéthersulfone contenant des unités de répétition de formule générale (1) 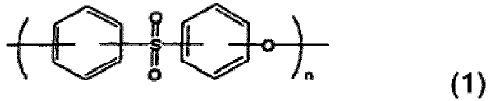 dans laquelle n est un nombre dans la plage allant de 3 à 1 500, et les constituants polyphénylènesulfone sulfonés étant obtenus par sulfonation d'unités structurales de formule générale (2) 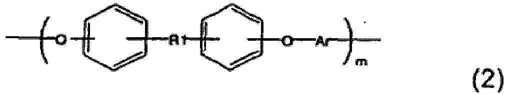
avec la signification R1 S(=O)₂;
Ar radical aromatique bivalent,
m nombre dans la plage allant de 3 à 1 500.

2. Copolymère séquencé selon la revendication 1, **caractérisé en ce que** les séquences polymères présentent une séparation de phases dans la plage de tailles allant de 10 à 100 nm.

3. Procédé de fabrication de copolymères séquencés de polyéthersulfone aromatiques selon l'une quelconque des revendications 1 ou 2, **caractérisé en ce qu'**un copolymère séquencé de polyéthersulfone aromatique est sulfoné avec de l'acide sulfurique concentré à une température dans la plage allant de 20 à 70 °C.

4. Utilisation de copolymères séquencés de polyéthersulfone aromatiques selon l'une quelconque des revendications 1 ou 2 en tant que polyélectrolyte pour la fabrication de piles à combustible ou pour la fabrication de membranes pour le traitement de l'eau.

5. Pile à combustible, contenant en tant que polyélectrolyte un copolymère séquencé de polyéthersulfone aromatique selon l'une quelconque des revendications 1 ou 2.

6. Membrane pour le traitement de l'eau, contenant un copolymère séquencé de polyéthersulfone aromatique selon l'une quelconque des revendications 1 ou 2.
